# EUROPÄISCHE PATENTANMELDUNG

(11) **EP 1 338 996 A1**
(43) Veröffentlichungstag der Anmeldung: **27.08.2003**
(21) Anmeldenummer: 02003981.4
(22) Anmeldetag: 22.02.2002
(51) Int. Cl.: G06F 17/60, G07F 7/10

(54) **Vorrichtung und Verfahren zur Personalisierung von Chipkarten**

(71) Anmelder: BetaResearch Gesellschaft für Entwicklung und Vermarktung digitaler Infrastrukturen mbH, 85774 Unterföhring (DE)
(72) Erfinder: Hagn, Thomas, 84028 Landshut (DE)
(74) Vertreter: Betten & Resch

(57) **Zusammenfassung**

Die Erfindung betrifft ein Verfahren zur Chipkartenpersonalisierung, welches die folgendes Schritte aufweist: Aufbau eines gesicherten Kommunikationskanals zwischen einem die Benutzereingabe ermöglichenden Terminals und einer davon räumlich getrennten Personalisierungsvorrichtung; Übertragung von vom Kunden am Terminal eingegebenen die Personalisierung betreffenden Daten zu der Personalisierungsvorrichtung über den gesicherten Kommunikationskanal; Bereitstellen von einer von mehreren vorrätigen zu personalisierenden Chipkarten durch eine Chipkartenbereitstellungseinrichtung der Personalisierungsvorrichtung für eine Kontaktierung durch eine Chipkarten-Handlingseinrichtung der Personalisierungsvorrichtung; Übertragen von für die Personalisierung notwendigen Informationen von der Personalisierungsvorrichtung über das Chipkarten-Handlingsystem an die Chipkarte auf der Grundlage der vom Terminal an die Personalisierungsvorrichtung übertragenen Kundendaten zur Durchführung der Personalisierung.

## Beschreibung

Die vorliegende Erfindung betrifft ein Verfahren und eine Vorrichtung für die Personalisierung von Chipkarten.

Die Personalisierung von Chipkarten wird heute hauptsächlich im sogenannten Batch-Betrieb in offline-betriebenen Personalisierungszentren durchgeführt. Batch-Betrieb bedeutet dabei, daß in einem solchen Personalisierungszentrum vorher gesammelte Personalisierungsdaten, z. B. Name des Kunden oder verschiedene andere kundenspezifische Daten, in geeigneter Weise aufbereitet und dann in Stapelverarbeitung bei einem Personalisierungsvorgang verwendet werden.

Diese Personalisierungszentren sind streng von der Außenwelt abgeschirmt, da in ihnen sicherheitsrelevante Daten verarbeitet (z. Kundendaten oder auch PINs) werden und ein Durchsickern von Informationen nach außen sowie eine Einflußnahme von außen auf den Vorgang der Personalisierung aus Sicherheitsgründen unerwünscht ist.

Üblicherweise werden in solchen Personalisierungszentren Produktionsaufträge mit Losgrößen > 1 gefahren. Es läuft dabei ein Produktionsprozeß ab, auf den der Endkunde selbst keinen Einfluß hat. Die Kundenwünsche der einzelnen Kunden werden vorab gesammelt und dann macht die Personalisierungsinstanz, die das Personalisierungszentrum betreibt, Vorschläge oder Vorgaben für sogenannte Personalisierungsprofile. Ein Personalisierungsprofil ist dabei ein bestimmter Datensatz gemäß dem die Chipkartenpersonalisierung durchgeführt wird. Aufgrund der eingeschränkten Vorgabe möglicher Personalisierungsprofile ist die Individualität der einzelnen Personalisierungsvorgänge relativ eingeschränkt, und es werden daher meist größere Personalisierungsaufträge mit einheitlichen Personalisierungsprofilen gefahren.

Der Logistikaufwand wird um so größer, je kundenindividueller die Personalisierung durchgeführt wird. Mit wachsender Anzahl möglicher Personalisierungsprofile steigt naturgemäß auch der damit zusammenhängende logistische Aufwand, um Chipkarten des gewünschten Personalisierungsprofils in gewünschter Zahl produzieren zu können.

Da aus Sicherheitsgründen ein Personalisierungszentrum hermetisch von der Außenwelt abgeschirmt ist, wird der Kunde erst bei der Auslieferung der für ihn bestimmten Karte über spezifische kundenbezogene Personalisierungsergebnisse (etwa eine PIN) informiert. Personalisierungsdetails bzw. Informationen betreffend die Personalisierungsdetails werden üblicherweise dem Kunden über Anschreiben bzw. gesonderte Sicherheitsbriefe, die dann beispielsweise die PIN enthalten, dem Kunden übermittelt.

Es ist daher eine Aufgabe der vorliegenden Erfindung, ein Verfahren und eine Vorrichtung bereitzustellen, mit denen eine Chipkartenpersonalisierung in flexiblerer und stärker auf die Wünsche des Kunden eingehender Weise durchgeführt werden kann.

Gemäß einem ersten Aspekt der vorliegenden Erfindung wird die Aufgabe im wesentlichen gelöst durch ein Verfahren zur Chipkartenpersonalisierung, bei dem von einem Benutzer an einem Terminal eingegebene Kundendaten über einen gesicherten Kommunikationskanal an eine räumlich vom Terminal getrennte Personalisierungsvorrichtung übermittelt werden. Basierend auf den Kundendaten wird dann einer Chipkarten-Handlingseinrichtung der Personalisierungsvorrichtung eine von mehreren Chipkarten von einer Chipkartenbereitstellungseinrichtung der Personalisierungsvorrichtung bereitgestellt und zur Durchführung der Personalisierung kontaktiert. Der Personalisierungsvorgang wird dann auf der Grundlage der vom Terminal an die Personalisierungsvorrichtung übermittelten Kundendaten durchgeführt.

Die Ermöglichung der Eingabe von Kundendaten durch das Terminal und die Übermittlung der Kundendaten an die Personalisierungsvorrichtung, welche räumlich getrennt vom Terminal angeordnet ist, ermöglicht die direkte Einflußnahme des Kunden auf den Personalisierungsvorgang, ohne daß die für ein Personalisierungszentrum erforderlichen Sicherheitsbedürfnisse kompromittiert werden. Die Sicherheit der Daten ist gewährleistet durch die Übermittlung über einen gesicherten Kommunikationskanal, nur über diesen kann der Kunde Einfluß auf den Personalisierungsvorgang nehmen.

Als Implementierung eines solchen gesicherten Kommunikationskanals kommt beispielsweise eine leitungsvermittelte Telefonverbindung in Frage, oder aber auch z. B. eine Standleitung vom Terminal zur Personalisierungsvorrichtung. Weitere Alternativen wären eine Internetverbindung unter Verwendung von Verschlüsselungs- und/oder Authentifizierungsalgorithmen, eine Intranetverbindung, etcetera.

Der gesicherte Kommunikationskanal sollte - verglichen beispielsweise mit einer ungesicherten Internetverbindung - durch die Art der Verbindung selbst (z. B. leitungsvermittelte Verbindung oder Standleitung) und/oder oder durch Verwendung zusätzlicher Authentifizierungs- und oder Verschlüsselungsalgorithmen gegen Einflußnahme von Seiten dritter gesichert sein, um beispielsweise ein Abhören der Verbindung oder auch ein aktives Einwirken auf die Verbindung von außen möglichst zu verhindern oder zu erschweren.

Der Kunde hat dadurch die Möglichkeit, sein Personalisierungsprofil selbst (online) für eine individuelle Karte zusammenzustellen und direkt an die Personalisierungsinstanz weiterzuleiten. Dadurch werden alle Informationen zeitnah zur Personalisierung übermittelt.

Gemäß einem bevorzugten Ausführungsbeispiel werden auch während des Personalisierungsvorganges Daten mit der Personalisierungsinstanz (der Personalisierungsvorrichtung) ausgetauscht. Dadurch bleibt der Kunde über den Fortschritt der Personalisierung auf dem laufenden und kann gegebenenfalls auch einzelne Schritte wieder rückgängig machen und korrigieren, solange die Personalisierung noch nicht vollständig abgeschlossen ist. Der Kunde kann dadurch seine Personalisierungstransaktion mitverfolgen.

Gemäß einem weiteren bevorzugten Ausführungsbeispiel wird der Kunde über die Personalisierung seiner Karte durch Übermittlung geeigneter Informationen informiert. Dabei können diese geeigneten Informationen beispielsweise kartenindividuelle Informationen, Schlüssel oder auch beispielsweise eine PIN sein. Die Online-Übertragung von kundenspezifischen Daten während des Personalisierungsvorgangs ist durch die Bereitstellung des gesicherten Kommunikationskanals möglich.

Gemäß einem bevorzugten Ausführungsbeispiel werden während des Personalisierungsvorgangs kundenspezifische Daten, z. B. eine PIN der Karte oder ein Aktivierungscode, generiert und - gegebenenfalls online - an den Kunden übermittelt. Dadurch können beispielsweise Sicherheitsbriefe, mittels derer eine PIN oder weitere sicherheitsrelevante Daten an den Kunden übermittelt werden, entfallen.

Gemäß einem weiteren bevorzugten Ausführungsbeispiel können online Schlüssel definiert und in den Personalisierungsvorgang mit eingebracht werden. Auch die Wahl einer PIN durch den Kunden am Terminal ist durch die Bereitstellung des gesicherten Kommunikationskanals und die Übermittlung von personalisierungsrelevanten Daten zwischen Terminal und Personalisierungsvorrichtung möglich.

Gemäß einem weiteren bevorzugten Ausführungsbeispiel wird die Personalisierung in einer Personalisierungsvorrichtung durchgeführt, welche eine Chipkartenbereitstellungseinrichtung und eine Chipkartenhandlingseinrichtung umfaßt. Die Chipkartenbereitstellungseinrichtung ist dabei eine rechnergesteuerte Einrichtung mit einer Lagereinrichtung zum Lagern der zu personalisierenden Chipkarten sowie mit einer Transporteinrichtung, um die zu personalisierenden Chipkarten von der Lagereinrichtung zur Chipkartenhandlingseinrichtung zu transportieren. Die Chipkartenbereitstellungseinrichtung kann dabei verschiedene Arten von Chipkarten, die in der entsprechend ausgebildeten Lagereinrichtung vorrätig gelagert werden, basierend auf den vom Terminal übermittelten Kundendaten mittels der Chipkartentransporteinrichtung an die Chipkarten-Handlingseinrichtung weiterreichen. Dadurch wird ein sehr hoher Automationsgrad mit relativ geringen bzw. stark automatisierten Logistikaufwand möglich.

Die Chipkartenbereitstellungseinrichtung kann auch so aufgebaut sein, dass ein Operator Anweisungen zur Entnahme von Karten aus dem Lager über ein Benutzerinterface der Chipkartenbereitstellungseinrichtung erhält. Ebenso erhält er über das Benutzerinterface die Anweisungen an welche Stelle des Chipkartenhandlingsystems bzw. wie er die Karte zu plazieren und zu behandeln hat.

Gemäß einem weiteren bevorzugten Ausführungsbeispiel kann auch eine bereits personalisierte Chipkarte im nachhinein modifiziert werden. Hierfür ist beispielsweise die Personalisierungsvorrichtung bzw. die entsprechende Chipkartenbereitstellungseinrichtung mittels einer entsprechend ausgestalteten Aufnahmeeinrichtung für die Aufnahme von (bereits personalisierten) Chipkarten zugänglich, die dann an das Chipkarten-Handlingsystem weitergereicht und über den gesicherten Kommunikationskanal und die Personalisierungsvorrichtung bezüglich ihrer Personalisierungsdaten modifiziert werden können.

Gemäß einem weiteren bevorzugten Ausführungsbeispiel werden bei der Personalisierung Sicherheitsmerkmale generiert, die zwar nicht auf der Karte gespeichert sind, aber beispielsweise für die Kartenauslieferung oder deren Aktivierung benötigt werden (z.B. ein Abhol-, ein Empfangsberechtigungscode bzw. Aktivierungscode), online an den Benutzer übertragen und für die Überprüfung der Kundenauthentizität bzw. der Aktivierung der Karte verwendet.

Dies hat den Vorteil, daß die Distribution der kundenindividiuellen, teilweise sehr sicherheitsrelevanten Daten nicht durch eine lange administrative Kette sowohl der Datenverarbeitung als auch des manuellen Handlings geschleust werden muß, da die Kundeninformationen direkt online an den Endkunden übertragen werden.

Gemäß einem weiteren bevorzugten Ausführungsbeispiel wird im Rahmen des Personalisierungsvorgangs die Chipkarte auch beschriftet.

Gemäß einem weiteren bevorzugten Ausführungsbeispiel erhält bei der Auslieferung ein Kunde seine Chipkarte nur dann, wenn er dem Überbringer die ihm online über das Terminal übermittelte Kennung (Authentifizierungscode) nennen kann. Als weiteres Sicherheitsmerkmal kann beispielsweise die Chipkarte nur dann freigeschaltet werden, wenn der Kunde den ihm online übermittelten Aktivierungscode kennt und bei der ersten Benutzung der Chipkarte einzugeben in der Lage ist. Nach einer bestimmten Anzahl von Fehlversuchen wird die Karte dann beispielsweise gesperrt.

Die vorliegende Erfindung wird im folgenden anhand mehrerer Ausführungsbeispiele unter Bezugnahme auf die beiliegenden Zeichnungen im Detail beschrieben.
- Fig. 1: zeigt schematisch die Kommunikation zwischen einem Terminal und einer Personalisierungsvorrichtung gemäß einem Ausführungsbeispiel der vorliegenden Erfindung.
- Fig. 2: zeigt schematisch den Aufbau einer Personalisierungsvorrichtung gemäß einem Ausführungsbeispiel der vorliegenden Erfindung.
- Fig. 3: zeigt schematisch den Aufbau einer Personalisierungsvorrichtung gemäss einem weiteren Ausführungsbeispiel der vorliegenden Erfindung.

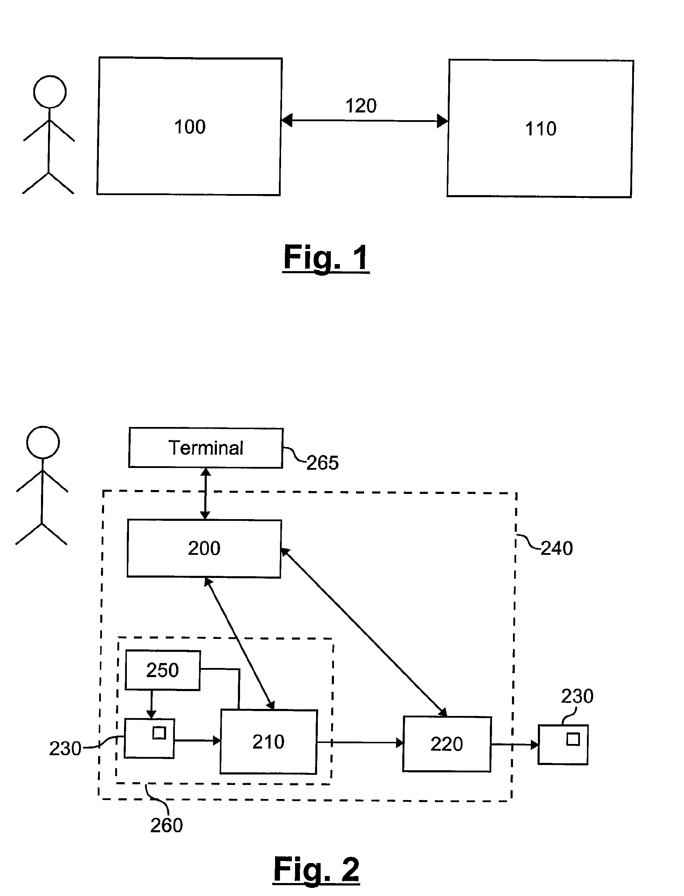

Fig. 1 zeigt schematisch ein Terminal 100, das einem ebenfalls dargestellten Benutzer eine Eingabe von Daten sowie eine Ausgabe von Daten an den Benutzer ermöglicht. Bei dem Terminal handelt es sich beispielsweise um einen beliebigen Computer mit Internet-Zugang, es kann aber auch ein speziell für diesen Zweck ausgebildetes Terminal sein, bei dem sich ein Benutzer zunächst - etwa über eine Chipkarte oder durch Eingabe einer PIN- authentifizieren muß, um dann das Terminal zu benutzen. Auch ein Terminal ohne Authentifizierungsnotwendigkeit ist jedoch hier vorstellbar. Über die Kommunikationsverbindung 120 kann dann der Benutzer mit einer Personalisierungsvorrichtung 110 kommunizieren, die auf Anforderung des Benutzers eine Personalisierung einer Chipkarte (bezeichnet als ST) durchführt. Die Chipkarten selbst befinden sich innerhalb der Personalisierungsvorrichtung 110 in einem (abgesicherten) Bereich, um einen Zugriff von Dritten auf die Chipkarten sowie den Vorgang der Personalisierung zu verhindern, da der Personalisierungsvorgang mit der Verarbeitung von sicherheitsrelevanten Daten einhergeht.

Auf Anforderung des Kunden über das Terminal 100 hin wird nun der Personalisierungsvorgang eingeleitet. Hierzu wird dem Kunden über das Terminal 100 zunächst Informationen über mögliche Karten und Personalisierungsprofile dargestellt, so daß der Kunde eine gewünschte Karte und ein gewünschtes Personalisierungsprofil auswählen kann. Um die Sicherheit der Personalisierungsdaten zu gewährleisten, wird dabei zunächst über die Kommunikationsverbindung 120 ein gesicherter Kommunikationskanal aufgebaut, beispielsweise ein sogenannter SSL-Kanal (SSL = secure socket layer). Es kommen jedoch auch andere Möglichkeiten der Verschlüsselung oder Absicherung in Frage, um die Sicherheit der personenbezogenen Daten zu gewährleisten, beispielsweise eine Standleitung zwischen Terminal 100 und Personalisierungsvorrichtung 110 oder auch andere Verschlüsselungsalgorithemen oder -systeme. Der gesicherte Kommunikationskanal 120 bleibt während des gesamten Personalisierungsvorgangs aufgebaut.

Der Kunde bestimmt dann über das Terminal 100 ein Personalisierungsprofil und fordert eine entsprechende Kartenpersonalisierung über den sicheren Kommunikationskanal 120 von der Personalisierungsvorrichtung an. Die Personalisierungsvorrichtung empfängt und verarbeitet die Kartenbestellung mit dem Personalisierungsprofil und beginnt mit dem Personalisierungsvorgang der Chipkarte.

Vor, während und nach dem Personalisierungsvorgang können spezifische Informationen über den bestellten Kartentyp und den Personalisierungsvorgang selbst zwischen dem Kunden und der Personalisierungsvorrichtung 110 über das Terminal und den gesicherten Kommunikationskanal 120 ausgetauscht werden. Dieser Informationsaustausch kann auch insbesondere für Vorgänge, die an die Personalisierung anschließen, verwendet werden. Die übertragenen Informationen können dabei auch Sicherheitsmerkmale, beispielsweise eine PIN enthalten.

Nach erfolgter Personalisierung wird dem Kunden von der Personalisierungsvorrichtung 110 das Ergebnis der Personalisierung, Details bzw. Informationen über seine Karte, über den Personalisierungsvorgang und eventuell über die geplanten Vorgänge nach dem Personalisierungsvorgang übermittelt (Kartenabholung bzw. -lieferung). Auch dabei können wieder Sicherheitsmerkmale in den übertragenen Informationen enthalten sein, beispielsweise eine PIN, die für die weitere Verwendung der Chipkarte nötig ist. Es kann aber beispielsweise auch ein Aktivierungscode an den Kunden übertragen werden, der nach erfolgter Auslieferung bei erster Benutzung der Chipkarte eingegeben werden muß, um die Chipkarte zu aktivieren. Die übertragenen Informationen können beispielsweise auch ein Kennwort enthalten, das dem Benutzer bekannt sein muß, damit er sich als berechtigt ausweist, die ausgelieferte Chipkarte in Empfang zu nehmen.

Der Kunde bestätigt dann über das Terminal 100 den Erhalt der Informationen, woraufhin die Personalisierungsvorrichtung 110 den Personalisierungsvorgang als abgeschlossen betrachtet und zur Auslieferung der Chipkarte fortschreitet. Dabei können beispielsweise bei der Personalisierungsvorrichtung 110 automatisch Dokumente generiert werden (z.B. Anschreiben, Datenblatt etc.), die für eine Automatisierung der Erstellung des Auslieferungsbriefs nützlich sind.

Durch das beschriebene Verfahren erhält der Kunde die Möglichkeit, sein Personalisierungsprofil selbst (online) für eine individuelle Karte zusammenzustellen und direkt an die Personalisierungsinstanz weiterzuleiten. Alle Informationen werden zeitnah zur Personalisierung selbst übermittelt und der Kunde hat durch den ständig vorhandenen gesicherten Kommunikationskanal 120 die Möglichkeit, während des Personalisierungsvorgangs mit der Personalisierungsinstanz Informationen auszutauschen. Durch den Einsatz geeigneter Sicherheitsarchitekturen (z. B. SSL) können bei den Verfahren gesonderte Sicherheitsbriefe entfallen, da der Kunde direkt online über mögliche Schlüssel, deren Kenntnis für die Benutzung der Chipkarte erforderlich ist, informiert werden kann.

Der Kunde kann über das Terminal 100 seine Personalisierungstransaktion mitverfolgen. Er wird am Ende über die Personalisierung seiner Karte informiert. Dabei können Daten bzw. kartenindividuelle Informationen und Schlüssel an den Kunden übertragen werden. Auch eine Online-Übertragung von kundenspezifischen Daten ist während des Personalisierungsvorgangs möglich. So kann beispielsweise in das Terminal der Name des Benutzers eingegeben werden, und bei Vorhandensein einer entsprechenden Druckervorrichtung oder Beschriftungsvorrichtung innerhalb der Personalisierungsvorrichtung auf die Karte selbst aufgebracht werden. In ähnlicher Weise können vom Kunden selbst gewählte Kennwörter oder auch eine PIN in der zu personalisierenden Chipkarte "untergebracht" bzw. für die Personalisierung der Chipkarte verwendet werden. Der Kunde wird dadurch in den elektronischen Personalisierungsvorgang mit einbezogen, er erhält eine "echte" personalisierte Karte. So können im Rahmen des Personalisierungsvorgangs auch online Schlüssel definiert werden und in den Personalisierungsvorgang mit eingebracht werden. Die Schlüssel können dabei, je nach Ausgestaltung des Systems, in der Personalisierungsvorrichtung oder aber auch am Terminal generiert werden. So ist beispielsweise denkbar, dass der Benutzer auf bekannte Weise (etwa durch Bewegung der Maus auf dem Bildschirm) einen Schlüssel generiert, um den Rechner der Personalisierungsvorrichtung von der Schlüsselerzeugung zu entlasten.

In der Personalisierungsvorrichtung 110 können die Karten über entsprechende Automaten oder Roboter (gemäß der Kundenbestellung) aus einem Lager entnommen werden und gemäß den Kundenanforderungen personalisiert werden. Dadurch ist ein sehr hoher Automationsgrad mit relativ geringem bzw. stark automatisierten Logistikaufwand möglich. Hierzu können Robotereinrichtungen bekannter Art mit geeigneter Steuerungssoftware verwendet werden.

Gemäß einem weiteren Ausführungsbeispiel kann die Personalisierungsvorrichtung auch eine Chipkartenausgabeeinrichtung enthalten. Dann ist beispielsweise direkt eine Ausgabe der personalisierten Chipkarte über einen Point-of-Sales-Terminal mit einem zugehörigen Kartenausgabeautomaten möglich (z.B. im Bankbereich).

Gemäß einem weiteren Ausführungsbeispiel verfügt das Terminal auch über eine Kartenaufnahmeeinrichtung, in die der Benutzer seine (alte) Karte eingeben kann. Es können dann beispielsweise die Daten von abgelaufenen Karten ausgelesen werden und online in die Personalisierung der Ersatzkarte einfließen.

Teuere und aufwendige Sicherheitsbriefe können bei dem geschilderten Verfahren bzw. beschriebenen Vorrichtung entfallen, da die Sicherheitsmerkmale einer Karte online über einen gesicherten Kommunikationskanal an den Endkunden übertragen werden können. Auch Sicherheitsmerkmale, die nicht auf der Karte gespeichert sind, aber z.B. für die Kartenauslieferung benötigt werden (z.B. ein Abhol-, Empfangsberechtigungs- bzw. Aktivierungscode) können online übertragen werden und für die Überprüfung der Kundenauthentizität bzw. die Aktivierung der Karte verwendet werden.

Beispielsweise ist es auch möglich, dass für eine über das Terminal bestellte Karte online ein Abholcode an den Kunden übertragen wird und der Kunde sich seine Chipkarte dann an einem Ausgabeautomaten (etwa in einer Bank oder auch einem Kaufhaus) gegen Vorlage bzw. Eingabe dieses Codes "abholt", d.h. die Karte wird an den Kunden am Automaten ausgegeben

Für die Personalisierungsinstanz ergibt sich hier auch der Vorteil, daß die Verteilung der kundenindividuellen, teilweise sehr sicherheitsrelevanten Daten, nicht durch eine sehr lange Kette der Datenverarbeitung geschleust werden muß, da die Kundeninformationen bei dem Verfahren direkt online an den Endkunden übertragen werden.

Der Kunde kann neben dem Personalisierungsergebnis und den Liefer- bzw. Abholinformationen noch Empfangsberechtigungs- bzw. Zugangs-/Aktivierungscodes für seine Karte online erhalten. Der Kunde erhält dann beispielsweise seine neue Karte durch Lieferanten bzw. bei der Abholstelle nur dann, wenn ihm der Empfangsberechtigungscode bekannt ist. Die Kartenanwendungen werden für Kunden nur dann freigeschaltet, wenn der Endanwender den entsprechenden Aktivierungscode für die Anwendungen kennt.

Unter Bezugnahme auf Fig. 2 wird nun ein System gemäß einem weiteren Ausführungsbeispiel der vorliegenden Erfindung näher beschrieben. Die Personalisierungsvorrichtung 240 umfaßt dabei einen Steuerungsrechner 200, eine Chipkartenbereitstellungseinrichtung 260 und eine Chipkartenhandlingeinrichtung 220. Die Chipkartenbereitstellungseinrichtung 260 umfaßt dabei eine Lagereinrichtung 250 sowie eine Chipkartentransporteinrichtung 210. Sowohl die Chipkartentransporteinrichtung 210 als auch die Chipkartenhandlingeinrichtung 220 sind mit dem Rechner 200 verbunden, der diese über geeignete Kommunikationsverbindungen steuert. Der Rechner 200 selbst wiederum ist über den gesicherten Kommunikationskanal 270 mit dem Terminal 265 verbunden, das Daten von dem Benutzer empfängt und an diesen ausgibt.

Nachfolgend wird der Betrieb des in Fig. 2 dargestellten Systems näher beschrieben.

Über das Terminal 265 fordert der Kunde einen Personalisierungsvorgang an. Daraufhin werden mögliche Karten- und Personalisierungsinformationen dem Endkunden über das Terminal dargestellt. Auf dem Rechner 200 der Personalisierungsvorrichtung sind die entsprechenden möglichen Daten wie vorhandene Karten, Kartentypen, Kartenlayouts und mögliche Personalisierungsprofile gespeichert und werden von dort an das Terminal 265 über die Kommunikationsverbindung 270 übermittelt . Eine solche Konfiguration aus Terminal und Steuerungsrechner kann beispielsweise über einen auf dem Rechner 200 (oder auch auf einem separaten Rechner) laufenden Webserver sowie einen auf dem Terminal laufenden Browser realisiert werden.

Es wird dann (beispielsweise bereits auf die Personalisierungsanforderung des Benutzers hin) ein gesicherter Kommunikationskanal zwischen dem Endkundensystem (und dem Terminal 265) und der Personalisierungsinstanz (der Personalisierungsvorrichtung 240) aufgebaut. Dies geschieht beispielsweise über einen bereits erwähnten SSL-Tunnel, wobei aber auch andere Systeme denkbar sind, die eine gesicherte Kommunikation zwischen dem Terminal 265 und der Personalisierungsvorrichtung 240 ermöglichen.

Der Kunde wählt dann den Kartentyp und/oder das Kartenlayout und das Personalisierungsprofil für die elektronische Personalisierung, das er sich über die angebotenen Informationen selbst zusammenstellen kann und übermittelt seine Wahl an die Personalisierungsvorrichtung 240. Im Rechner 200 der Personalisierungsvorrichtung 240 werden die entsprechenden Informationen empfangen und es wird ein den Personalisierungsinformationen entsprechender Chipkartentyp aus dem Lager 250 geholt. Hierzu greift die vom Rechner 200 gesteuerte Chipkartenbereitstellungseinrichtung 210 über eine geeignete Einrichtung (z.B. ein Kartentransportband, Greifarme oder ähnliches) auf das Lager 250 zu, um eine Chipkarte 230 aus dem Lager zu entnehmen und dem Chipkartenhandlingsystem 220 zuzuführen.

In dem Chipkartenhandlingsystem der Personalisierungsvorrichtung 240 wird die Chipkarte für die elektronische Personalisierung kontaktiert. Die zum Durchführen des Personalisierungsvorgangs gemäß des vom Kunden angeforderten Personalisierungsprofils notwendigen Informationen werden vom Terminal 265 über den gesicherten Kommunikationskanal 270 an den Rechner 200 und von dort an das Chipkartenhandlingsystem 220 weitergeleitet. Über das Chipkartenhandlingsystem kommuniziert die Personalisierungsvorrichtung mit der Chipkarte, um die für einen Personalisierungsvorgang notwendigen Daten und Steuerkommandos an die Chipkarte zu übertragen bzw. von der Chipkarte zurück zu übertragen.

Dabei kann das Chipkartenhandlingsystem je nach spezieller Ausgestaltung des Ausführungsbeispiels auf unterschiedliche Weise aufgebaut und mit unterschiedlichen Funktionen betraut sein. Beispielsweise kann sich die Funktion des Chipkartenhandlingsystems darauf beschränken, die Kontaktierung der Karte herzustellen und die Kommunikation zwischen einer Steuereinheit, die die Chipkartenkommandos gemäss der für die Personalisierung durchzuführenden Ablauflogik erzeugt und der Chipkarte selbst zu ermöglichen. Beispielsweise kann in Fig. 2 der Rechner 200 diese Funktion der Steuereinheit übernehmen, die Chipkartenkommandos kommen dann vom Rechner 200 und die Antworten werden ebenfalls an den Rechner 200 weitergeleitet, und zwar durch das Chipkartenhandlingsystem. Die Personalisierung bzw. die Durchführung der hierfür erforderlichen Ablauflogik erfolgt dann auf dem Rechner 200, über einen transparenten Kommunikationskanal wie beispielsweise beschrieben im Europäischen Patent EP 0 981 803 werden dann die Chipkartenkommandos über das Chipkartenhandlingsystem lediglich weitergeleitet.

Gemäss einem weiteren Ausführungsbeispiel kann jedoch das Chipkartenhandlingsystem 210 selbst teilweise oder vollständig die Durchführung der für die Personalisierung erforderlichen Ablauflogik und insbesondere die Erzeugung der dafür erforderlichen Chipkartenkommandos übernehmen. Beispielsweise werden dann vom Rechner 200 die Rahmenbedingungen der Personalisierung (Personalisierungsprofil, Personalisierungsparameter wie PINs, etcetera) an das Chipkartenhandlingsystem 210 übermittelt, das dann autonom die Chipkarte kontaktiert und durch Abwicklung der entsprechenden Ablauflogik die Personalisierung durchführt.

Auch Zwischenstufen zwischen den beiden geschilderten Beispielen sind jedoch denkbar. So können beispielsweise während der Personalisierung bestimmte Aufgaben (etwa die Erzeugung von Schlüsseln) vom Rechner 200 durchgeführt werden, andere Aufgaben wie die Abwicklung der zur Personalisierung erforderlichen Chipkartenkommandos, die dann die so erzeugten Schlüssel verwenden, dagegen vom Chipkartenhandlingsystem 210.

Während des Personalisierungsvorgangs können aktuelle kundenspezifische Daten nötig werden, die dann über den gesicherten Kommunikationskanal und das Terminal vom Kunden angefragt werden. Die Notwendigkeit von Kundeninformationen wird über Definitionen im Personalisierungsprofil gesteuert. Das Personalisierungsprofil definiert den "Ablauf' der Personalisierung sowie die Art der Daten, die für den Personalisierungsvorgang erforderlich sind.

Falls gemäß dem Personalisierungsprofil weitere Kundendaten erforderlich sind, so werden diese vom Endkunden an das Terminal eingegeben bzw. am Terminal aus angebotenen Optionen ausgewählt, vom Terminal werden sie dann über den gesicherten Kommunikationskanal an den Steuerungsrechner 200 und von diesem an die Chipkartenhandlingeinrichtung 220 übertragen. Dabei ist anzumerken, daß nicht notwendigerweise die Daten völlig unverändert vom Terminal bis zu Chipkartenhandlingeinrichtung übertragen werden, vielmehr kann die Funktionalität des Rechners 200 auch so ausgestaltet sein, daß Kundendaten, die vom Terminal empfangen werden, zunächst aufbereitet werden, um dann in einer Form an das Chipkartenhandlingsystem weitergeleitet zu werden, die von diesem verarbeitet werden kann. Das Chipkartenhandlingsystem kann dabei selbst wiederum einen Steuerungscomputer umfassen, der die empfangenen Daten gegebenenfalls weiter aufbereitet und in die entsprechenden für den Personalisierungsvorgang erforderlichen Chipkartenkommandos umwandelt.

Daten vom Endkunden an die Personalisierungsvorrichtung 240 können kundenindividuelle PINs bzw. Schlüssel oder beliebige Kundendaten, die für den Personalisierungsvorgang notwendig sind, übertragen werden. Im Rahmen des Personalisierungsvorgangs können dann von der Personalisierungsvorrichtung - karten- bzw. kundenspezifische Informationen, die während der Personalisierung generiert wurden und dem Kunden mitgeteilt werden sollen, über den gesicherten Kommunikationskanal und das Terminal dem Kunden mitgeteilt werden. Welche Daten hier übermittelt werden sollen wird wiederum über Definitionen im Personalisierungsprofil gesteuert. Beispielsweise können Kundenschlüssel, PINs, Zertifikatsinformationen über ein Zertifikat auf der Karte, für die Auslieferung bzw. Abholung der Karten notwendige Informationen etc. an den Kunden übermittelt werden.

Der Kunde bestätigt dann über eine entsprechende Eingabe am Terminal den Erhalt der kundenspezifischen Daten.

Die Schritte der Übermittlung von Kundendaten vom Terminal an die Personalisierungsvorrichtung sowie von der Personalisierungsvorrichtung zurück über das Terminal an den Kunden können sich dabei im Rahmen des Personalisierungsvorgangs mehrfach wiederholen. Dabei kann während dieses Vorgangs die Chipkarte für den Personalisierungsvorgang geöffnet sein, da wegen des gesicherten Kommunikationskanals ein Zugang für Dritte zu den sicherheitsrelevanten Daten nicht möglich ist.

Während des Personalisierungsvorgangs selbst werden gemäß der Personalisierungsprofile Kommunikationssequenzen mit der Chipkarte gefahren, um die notwendigen Daten in der Chipkarte zu schreiben. Hierbei werden die vom Kunden angefragten Informationen gemäß der Personalisierungsprofilinformationen in die Chipkartenkommunikation eingebracht.

Verfügt die Personalisierungsvorrichtung auch über eine Druckervorrichtung oder eine Beschriftungsvorrichtung (in Fig. 2 nicht gezeigt), so kann auch die Chipkarte selbst mit Informationen beschrieben werden. Auch andere Formen der mechanischen Einwirkung zur Erzeugung von Kartenmerkmalen sind hier möglich, z. B. die Hochprägung (Embossing). Daneben kann in der Personalisierungsvorrichtung oder einer separaten Auslieferungsvorrichtung, die mit der Personalisierungsvorrichtung verbunden ist, beispielsweise ein personalisiertes Anschreiben erzeugt werden und eventuell die Chipkarte auf dem Anschreiben aufgebracht werden.

Abschließend wird dann von der Personalisierungsvorrichtung an das Terminal eine Nachricht übermittelt, die den Abschluß des Personalisierungsvorgangs bestätigt. Gegebenenfalls bestätigt dann ebenfalls der Endkunde den Abschluß der Personalisierung. Die somit personalisierte Chipkarte wird dann vom Chipkartenhandlingsystem an ein in Fig. 2 nicht gezeigtes Chipkartenauslieferungssystem übergeben. Gegebenenfalls kann auch erst im Chipkartenauslieferungssystem die Beschriftung der Chipkarte und die Anfertigung des Auslieferungsschreibens sowie das Anbringen der Chipkarte auf dem Auslieferungsschreiben durchgeführt werden.

Auch alle für eine Auslieferung erforderlichen Kunden- bzw. Chipkartendaten werden von der Personalisierungsvorrichtung an das Auslieferungssystem übermittelt.

Die Chipkarten werden dann vom Auslieferungssystem ausgeliefert bzw. einer Abholungsinstanz zugeführt. Dabei können für die Authentisierung des Kunden Kennwörter verwendet werden, die während des Personalisierungsvorgangs generiert wurden und dem Kunden mitgeteilt wurden. Beispielsweise können aber auch Kennwörter verwendet werden, die der Kunde selbst auswählt und über das Terminal eingegeben hat. Der Kunde muß dann bei der Abholung oder beim Empfang der Karte im Besitz dieses Kennworts sein. Das Kennwort kann beispielsweise auch auf dem Anschreiben aufgedruckt werden, so daß der Auslieferer es dem Endkunden vor der Übergabe abfragen kann.

Gemäß einem weiteren Ausführungsbeispiel umfassen die Daten, die während des Personalisierungsvorgangs an den Endkunden übermittelt werden, beispielsweise einen Authentisierungscode bei der Abholung bzw. der Auslieferung der Smartcard. Daneben kann beispielsweise ein Öffnungscode der Karte an den Kunden übermittelt werden, der für eine Öffnung oder Aktivierung der Karte erforderlich ist. Auch kann ein Erstinitialisierungscode der Karte an den Kunden übermittelt werden. Dieser wird dann beispielsweise anschließend verworfen bzw. durch einen vom Kunden gewählten bzw. neu generierten Erstinitialisierungscode ersetzt.

Auch kann beispielsweise im Rahmen des Personalisierungsvorgangs der Kunde selbst Paßwörter oder PINs auswählen, die dann im Rahmen der Personalisierung in die Chipkarte eingebracht werden.

Gemäss einem weiteren Ausführungsbeispiel können Kartendaten von einer alten Karte ausgelesen und für die Personalisierung einer neuen Karte verwendet werden. Hierzu führt der Kunde seine Karte in das Terminal ein und die Kartendaten werden aus der Karte ausgelesen und an die Personalisierungsvorrichtung übertragen. Das Auslesen kann dabei am Terminal selbst erfolgen, d.h. das Terminal kommuniziert mit der Chipkarte und liest die Daten aus, die dann vom Terminal an die Personalisierungsvorrichtung übertragen werden. Das Auslesen kann jedoch auch über einen transparenten Kommunikationskanal zwischen Terminal und Personalisierungsvorrichtung erfolgen, wie er beispielsweise in dem europäischen Patent EP 0 981 803 beschrieben wird. In diesem Fall ist das Terminal nur für die Kontaktierung der Karte zuständig, die Ablauflogik des Auslesens wird jedoch in der Personalisierungsvorrichtung abgewickelt.

Sind die ausgelesenen Daten in der Personalisierungsvorrichtung eingetroffen, so können sie (ganz oder teilweise, gegebenenfalls nach Rückfrage beim Benutzer über das Terminal) für die Personalisierung einer neuen Karte verwendet werden.

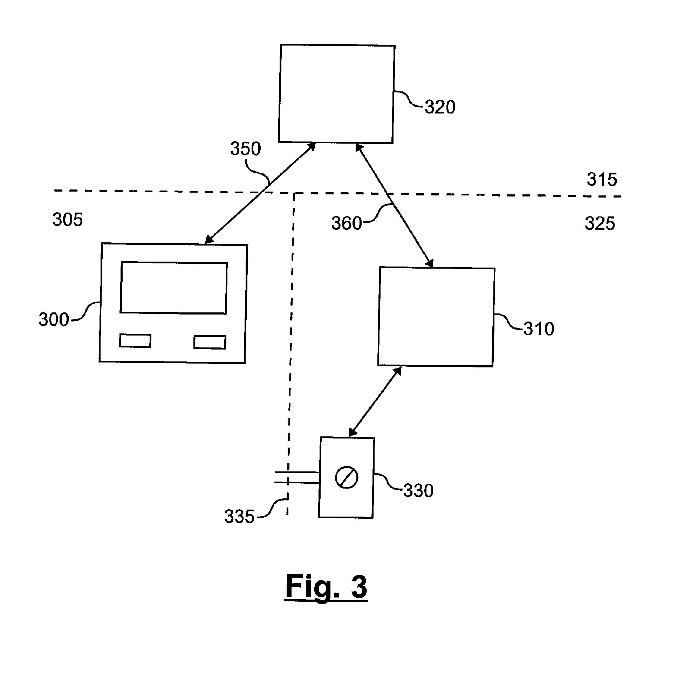

Unter Bezugnahme auf Fig. 3 wird nun ein weiteres Ausführungsbeispiel der vorliegenden Erfindung beschrieben. Dabei befindet sich das Terminal 300 in einem für den Kunden zugänglichen Bereich 305. Die Personalisierungsvorrichtung, welche einen Steuerungsrechner 320 und ein Chipkartenhandlingsystem 310 umfaßt, befinden sich jedoch jeweils in für die Kunden nicht zugänglichen Bereichen 315 bzw. 325. Über eine Transporteinrichtung und eine zugeordnete Öffnung, etwa einen Schlitz zur Ausgabe und/oder Eingabe von Chipkarten, ist jedoch das Chipkartenhandlingsystem, das im unzugänglichen Bereich 325 angeordnet ist, mit dem für den Kunden zugänglichen Bereich verbunden. Die Chipkartenhandlingeinrichtung 310 und die Transporteinrichtung 330 können beispielsweise in einer Bank angebracht sein, und zwar dergestalt, daß nur die Öffnung 335 für den Kunden zugänglich ist. Neben der Öffnung 335 ist auch das Terminal 300 für den Kunden zugänglich.

Über einen gesicherten Kommunikationskanal 350 ist dann beispielsweise das Terminal 300 mit dem Steuerungsrechner 320 verbunden. Diese Steuerungsrechner 320 befindet sich beispielsweise an einem separaten Ort, etwa einer Zentrale der Personalisierungsinstanz, die sämtliche Personalisierungsdaten verwaltet und Personalisierungsvorgänge steuert. Über einen weiteren gesicherten Kommunikationskanal 360 kann dann dieser Steuerungsrechner mit der Chipkartenhandlingeinrichtung 310, die gegebenenfalls selbst über einen weiteren Rechner verfügt, kommunizieren.

Im Rahmen dieser Anordnung ist es dann möglich, daß ein Kunde über das Terminal eine Personalisierungsanforderung abschickt, der Steuerungsrechner führt dann über die beiden gesicherten Kommunikationskanäle 350 und 360 in Verbindung mit der Chipkartenhandlingeinrichtung die Personalisierung durch. Die Transporteinrichtung 330 greift dabei auf bereits beschriebene Weise auf eine zu personalisierende Chipkarte zu, die dann vom Chipkartenhandlingssystem 310 kontaktiert wird, damit der Personalisierungsvorgang durchgeführt werden kann. Nach erfolgter Personalisierung kann dann über die Transporteinrichtung 330 und die Öffnung 335 die personalisierte Chipkarte direkt an den Kunden ausgegeben werden. Durch die Ausgabe der Chipkarte über die Öffnung 335 verläßt die Chipkarte den für den Kunden unzugänglichen Bereich 325 und gelangt in den für den Kunden zugänglichen Bereich 305. Der Kunde kann dann eine frisch personalisierte Chipkarte direkt in Empfang nehmen, eine Auslieferung, beispielsweise durch Post oder Kurier, entfällt.

Gemäß einem weiteren Ausführungsbeispiel sind die Öffnung 335 und die Transporteinrichtung 330 auch zur Aufnahme einer Chipkarte ausgebildet. Ein Benutzer kann dann eine Chipkarte in die Öffnung 335 eingegeben, sie wird dann von der Transporteinrichtung 330 an die Chipkartenhandlingeinrichtung 310 weitergeleitet. Die Chipkartenhandlingeinrichtung 310 informiert dann den Rechner 320, dass eine zugeführte Chipkarte bereit liegt, die personalisiert werden kann. Der Rechner 320 informiert dann das Terminal, daß ein Personalisierungsvorgang eingeleitet werden kann.

Durch Anzeige geeigneter Informationen informiert das Terminal 300 den Kunden, daß nun der Personalisierungsvorgang gestartet werden kann. Der Kunde wählt über das Terminal 300 dann die von ihm gewünschte Funktionalität aus. Dies kann beispielsweise auch die Personalisierung einer vom Kunden eingeführten (vom Kunden mitgebrachten) Chipkarte umfassen. Es kann aber auch die Erstellung einer neuen personalisierten Chipkarte sein, die die alte über die Öffnung 335 eingegebene und mittlerweile abgelaufene Chipkarte ersetzen soll.

Aus der vom Kunden mitgebrachten und über die Öffnung 335 zugeführten Karte können dann Daten ausgelesen und in dem Personalisierungsvorgang der neuen Chipkarte verwendet werden. Die alte Karte wird dann beispielsweise im Bereich 325 gesammelt und eventuell einer Vernichtung zugeführt.

Auf die Kundenanforderung hin wird dann der Personalisierungsvorgang eingeleitet, wobei der Personalisierungsvorgang selbst auf die bereits beschriebene Weise erfolgt.

## Patentansprüche

1. Verfahren zur Chipkartenpersonalisierung, welches die folgendes Schritte aufweist:
Aufbau eines gesicherten Kommunikationskanals zwischen einem die Benutzereingabe ermöglichenden Terminals und einer davon räumlich getrennten Personalisierungsvorrichtung;
Übertragung von vom Kunden am Terminal eingegebenen die Personalisierung betreffenden Daten zu der Personalisierungsvorrichtung über den gesicherten Kommunikationskanal;
Bereitstellen von einer von mehreren vorrätigen zu personalisierenden Chipkarten durch eine Chipkartenbereitstellungseinrichtung der Personalisierungsvorrichtung für eine Kontaktierung durch eine Chipkarten-Handlingseinrichtung der Personalisierungsvorrichtung;
Übertragen von für die Personalisierung notwendigen Informationen von der Personalisierungsvorrichtung über das Chipkarten-Handlingsystem an die Chipkarte auf der Grundlage der vom Terminal an die Personalisierungsvorrichtung übertragenen Kundendaten zur Durchführung der Personalisierung.

2. Verfahren nach Anspruch 1, bei dem die vom Terminal an die Personalisierungsvorrichtung übertragenen Daten ein Personalisierungsprofil identifizieren, das sich der Kunde über die am Terminal angebotenen Informationen und die gegebenenfalls bereitgestellten Möglichkeiten zur Dateneingabe selbst zusammenstellen kann.

3. Verfahren nach einem der vorhergehenden Ansprüche, bei dem basierend auf den vom Terminal zur Personalisierungsvorrichtung über den gesicherten Kommunikationskanal übermittelten Kundendaten ein den Kundendaten entsprechender Chipkartentyp aus einer Chipkartenlagereinrichtung mittels einer Chipkartentransporteinrichtung geholt und dem Chipkarten-Handlingsystem bereitgestellt wird.

4. Verfahren nach einem der vorhergehenden Ansprüche, wobei die Durchführung des Personalisierungsvorgangs ferner umfaßt:
Anfordern von kundenspezifischen Daten durch das Terminal zur Eingabe der Daten durch den Benutzer;
Übertragen der vom Benutzer eingegebenen kundenspezifischen Daten vom Terminal über den gesicherten Kommunikationskanal an die Personalisierungsvorrichtung;
Verwendung der übertragenen Daten zur Durchführung der Personalisierung.

5. Verfahren nach einem der vorhergehenden Ansprüche, welches ferner umfaßt:
Übermittlung von karten- und/oder kundenspezifischen Informationen, die während der Personalisierung generiert wurden, von der Personalisierungsvorrichtung über den gesicherten Kommunikationskanal an das Terminal zur Weiterleitung an den Kunden.

6. Verfahren nach Anspruch 5, bei dem die von der Personalisierungsvorrichtung an das Terminal übermittelten Daten eine oder mehrere der folgenden Daten umfassen:
Schlüssel oder Schlüsselpaare;
eine oder mehrere PINs;
Zertifikatsinformationen über ein Zertifikat auf der Karte;
für die Auslieferung bzw. Abholung der Karte notwendige Informationen, insbesondere Paßwort oder Identifkationscode;

7. Verfahren nach Anspruch 5 oder 6, welches ferner umfaßt:
Anforderung der Bestätigung der Übermittlung der kundenspezifischen Daten von der Personalisierungsvorrichtung an das Terminal durch eine entsprechende Eingabe des Kunden am Terminal.

8. Verfahren nach einem der vorhergehenden Ansprüche, wobei die Durchführung der Personalisierung mindestens einen der folgenden Schritte umfaßt:
Zuweisen von mindestens einer PIN zu der Chipkarte;
graphische Beschriftung der Chipkarte;
mechanische Einwirkung bzw. Veränderung der Karte zur Erzeugung von bestimmten Merkmalen, insbesondere Hochprägung;
Erzeugen eines personalisierten Anschreibens für eine postalische Übermittlung der Chipkarte, insbesondere mit zusätzlicher Anbringung der Chipkarte auf dem Anschreiben.

9. Verfahren nach einem der vorhergehenden Ansprüche, welches ferner umfaßt:
Generieren eines kundenspezifischen Kennworts für die Auslieferung der personalisierten Chipkarte;
Anbringung des Kennworts auf dem Auslieferungsanschreiben für die Chipkarte;

10. Verfahren nach einem der vorhergehenden Ansprüche, bei dem die Durchführung der Personalisierung ferner umfaßt:
Öffnen der Chipkarte durch die Chipkarten-Handlingseinrichtung zur Ermöglichung von Lese- und Schreibvorgängen auf der Chipkarte durch die Personalisierungsvorrichtung über die Chipkarten-Handlingseinrichtung;
Durchführen der Chipkartenpersonalisierung unter Ausführung entsprechender Kommunikationssequenzen zwischen der Personalisierungsvorrichtung und der Chipkarte sowie gegebenenfalls zwischen der Personalisierungsvorrichtung und dem Terminal.

11. Verfahren nach Anspruch 10, welches ferner umfaßt:
Anfordern von - in Abhängigkeit von den durch den Benutzer eingegebenen Kundendaten - weiteren Kundendaten durch die Personalisierungsvorrichtung oder die Chipkarte;
Übermitteln der Anforderung an das Terminal;
Übermitteln der vom Benutzer eingegebenen Daten vom Terminal erneut an die Personalisierungsvorrichtung.

12. Verfahren nach einem der vorhergehenden Ansprüche, wobei zwischen dem Terminal und der Personalisierungsvorrichtung folgende Daten übermittelt werden:
ein Authentisierungscode zur Authentisierung für die Abholung bzw. die Auslieferung der Chipkarte;
ein Öffnungscode für die Öffnung der Karte;
ein Erstinitialisierungscode der Karte;
eine Kundenanschrift für die postalische Auslieferung;
eines oder mehrere selbstgewählte Kunden-Paßwörter.

13. Verfahren nach einem der vorhergehenden Ansprüche, welches ferner umfasst:
Auslesen der Personalisierungsdaten einer bereits personalisierten Chipkarte; Verwenden der ausgelesenen Kartendaten zur Personalisierung einer neuen Chipkarte.

14. Vorrichtung zur Chipkartenpersonalisierung, welche aufweist:
eine Einrichtung zum Aufbau eines gesicherten Kommunikationskanals zwischen einem die Benutzereingabe ermöglichenden Terminals und einer davon räumlich getrennten Personalisierungsvorrichtung;
eine Einrichtung zum Übertragung von vom Kunden am Terminal eingegebenen die Personalisierung betreffenden Daten zu der Personalisierungsvorrichtung über den gesicherten Kommunikationskanal;
eine Chipkartenbereitstellungseinrichtung zum Bereitstellen von einer von mehreren vorrätigen zu personalisierenden Chipkarten der Personalisierungsvorrichtung für eine Kontaktierung durch eine Chipkarten-Handlingseinrichtung der Personalisierungsvorrichtung;
eine Einrichtung zum Übertragen von für die Personalisierung notwendigen Informationen von der Personalisierungsvorrichtung über das Chipkarten-Handlingsystem an die Chipkarte auf der Grundlage der vom Terminal an die Personalisierungsvorrichtung übertragenen Kundendaten zur Durchführung der Personalisierung.

15. Vorrichtung nach Anspruch 14, bei dem die vom Terminal an die Personalisierungsvorrichtung übertragenen Daten ein Personalisierungsprofil identifizieren, das sich der Kunde über die am Terminal angebotenen Informationen und die gegebenenfalls bereitgestellten Möglichkeiten zur Dateneingabe selbst zusammenstellen kann.

16. Vorrichtung nach einem der Ansprüche 14 oder 15, bei dem basierend auf den vom Terminal zur Personalisierungsvorrichtung über den gesicherten Kommunikationskanal übermittelten Kundendaten ein den Kundendaten entsprechender Chipkartentyp aus einer Chipkartenlagereinrichtung mittels einer Chipkartentransporteinrichtung geholt und dem Chipkarten-Handlingsystem bereitgestellt wird.

17. Vorrichtung nach einem der Ansprüche 14 bis 16, wobei die Durchführung des Personalisierungsvorgangs ferner umfaßt:
Anfordern von kundenspezifischen Daten durch das Terminal zur Eingabe der Daten durch den Benutzer;
Übertragen der vom Benutzer eingegebenen kundenspezifischen Daten vom Terminal über den gesicherten Kommunikationskanal an die Personalisierungsvorrichtung;
Verwendung der übertragenen Daten zur Durchführung der Personalisierung.

18. Vorrichtung nach einem der Ansprüche 14 bis 17, wobei der Personalisierungsvorgang ferner umfaßt:
Übermittlung von karten- und/oder kundenspezifischen Informationen, die während der Personalisierung generiert wurden, von der Personalisierungsvorrichtung über den gesicherten Kommunikationskanal an das Terminal zur Weiterleitung an den Kunden.

19. Vorrichtung nach Anspruch 18, bei dem die von der Personalisierungsvorrichtung an das Terminal übermittelten Daten eine oder mehrere der folgenden Daten umfassen:
Schlüssel oder Schlüsselpaare;
eine oder mehrere PINs;
Zertifikatsinformationen über ein Zertifikat auf der Karte;
für die Auslieferung bzw. Abholung der Karte notwendige Informationen, insbesondere Paßwort oder Identifikationscode;

20. Vorrichtung nach Anspruch 18 oder 19, wobei der Personalisierungsvorgang ferner umfaßt:
Anforderung der Bestätigung der Übermittlung der kundenspezifischen Daten von der Personalisierungsvorrichtung an das Terminal durch eine entsprechende Eingabe des Kunden am Terminal.

21. Vorrichtung nach einem der Ansprüche 14 bis 20, wobei die Durchführung der Personalisierung mindestens einen der folgenden Schritte umfaßt:
Zuweisen von mindestens einer PIN zu der Chipkarte;
graphische Beschriftung der Chipkarte;
mechanische Einwirkung bzw. Veränderung der Karte zur Erzeugung von bestimmten Merkmalen, insbesondere Hochprägung;
Erzeugen eines personalisierten Anschreibens für eine postalische Übermittlung der Chipkarte, insbesondere mit zusätzlicher Anbringung der Chipkarte auf dem Anschreiben.
Generieren eines kundenspezifischen Kennworts für die Auslieferung der personalisierten Chipkarte;
Anbringung des Kennworts auf dem Auslieferungsanschreiben für die Chipkarte.

22. Vorrichtung nach einem der Ansprüche 14 bis 21, welche ferner aufweist:
eine Einrichtung Öffnen der Chipkarte durch die Chipkarten-Handlingseinrichtung zur Ermöglichung von Lese- und Schreibvorgängen auf der Chipkarte durch die Personalisierungsvorrichtung über die Chipkarten-Handlingseinrichtung;
eine Einrichtung zum Durchführen der Chipkartenpersonalisierung unter Ausführung entsprechender Kommunikationssequenzen zwischen der Personalisierungsvorrichtung und der Chipkarte sowie gegebenenfalls zwischen der Personalisierungsvorrichtung und dem Terminal.

23. Vorrichtung nach einem der Ansprüche 14 bis 22, welche ferner aufweist:
eine Einrichtung zum Anfordern von - in Abhängigkeit von den durch den Benutzer eingegebenen Kundendaten - weiteren Kundendaten durch die Personalisierungsvorrichtung oder die Chipkarte;
eine Einrichtung zum Übermitteln der Anforderung an das Terminal;
eine Einrichtung zum Übermitteln der vom Benutzer eingegebenen Daten vom Terminal erneut an die Personalisierungsvorrichtung.

24. Vorrichtung nach einem der Ansprüche 14 bis 23, wobei zwischen dem Terminal und der Personalisierungsvorrichtung folgende Daten übermittelt werden:
ein Authentisierungscode zur Authentisierung für die Abholung bzw. die Auslieferung der Chipkarte;
ein Öffnungscode für die Öffnung der Karte;
ein Erstinitialisierungscode der Karte;
eine Kundenanschrift für die postalische Auslieferung;
eines oder mehrere selbstgewählte Kunden-Paßwörter.

25. Vorrichtung nach einem der Ansprüche 14 bis 24, welche ferner aufweist:
eine Einrichtung zum Auslesen von Personalisierungsdaten von einer bereits
personalisierten Chipkarte;
eine Einrichtung zum Verwenden der ausgelesenen Personalisierungsdaten zum Personalisieren einer neuen Chipkarte.

26. Computerprogramm, insbesondere auf einem Datenträger gespeichertes Computerprogramm, welches von einem Computer ausführbare Instruktionen umfasst, die so ausgestaltet sind, dass sie einen Computer in die Lage versetzen, ein Verfahren gemäss einem der Ansprüche 1 bis 13 auszuführen.
